# EUROPÄISCHE PATENTSCHRIFT

(11) **EP 1 188 490 B1**
(45) Veröffentlichungstag und Bekanntmachung des Hinweises auf die Patenterteilung: **19.03.2003**
(21) Anmeldenummer: 00119894.4
(22) Anmeldetag: 13.09.2000
(51) Int. Cl.: B07B 13/11, B03B 9/06, B29B 17/02

(54) **Verfahren zum Sortieren einer Kunststofffraktion und Abfallsortieranlage**
Process for sorting a fraction of plastics and waste sorting installation
Procédé de tri d'une fraction de plastiques et dispositif de tri de déchets

(43) Veröffentlichungstag der Anmeldung: 20.03.2002
(73) Patentinhaber: Trienekens AG, 41061 Mönchengladbach (DE); Stadler Anlagenbau GmbH, 88361 Althausen (DE)
(72) Erfinder: Stadler, Wilhelm, D-88361 Altshausen (DE); Hüskens, Jürgen, D-41748 Viersen (DE); Dell, Thomas, D-52428 Jülich (DE)
(74) Vertreter: Cohausz & Florack

(56) Entgegenhaltungen:
- DE-A- 19 651 571
- FR-A- 2 777 212
- US-A- 4 771 894

## Beschreibung

Die Erfindung betrifft ein Verfahren zum Sortieren einer Kunststofffraktion innerhalb einer Abfallsortieranlage sowie eine entsprechende Abfallsortieranlage.

Verfahren zum Sortieren einer Kunststofffraktion und Abfallsortierungsanlagen sind z.B. aus der FR-A-2 777 212 oder aus der DE-A-196 51 571 bekannt.

Aus des US-A-4 771 894 ist ferner ein trogähnlicher Schwingförderer zum Trennen von unterschiedlich geformten Bestandteilen eines Abfallgemischs bekannt.

In Deutschland werden derzeit Leichtverpackungen separat zum sonstigen Hausmüll gesammelt, um die in den Leichtverpackungen enthaltenen Stoffe einer Wiederverwertung zuzuführen. Diese Art der Abfalltrennung wird Duales System bezeichnet. Beim Sortieren des Leichtverpackungsmülls ist es, um eine Sortenreinheit der einzelnen Materialien zu erreichen, notwendig, verschiedenste Techniken einzusetzen, um die Materialien voneinander zu trennen. So gibt es magnetisch wirkende Metallabscheider zum Abtrennen von magnetischen Metallen, Abscheider für sonstige Metalle, Windsichter zum Trennen von schweren und leichten Fraktionen, Siebe in unterschiedlichsten Formen zum Trennen unterschiedlicher Korngrößen sowie auch Sichtungsstrecken, bei denen bestimmte Abfallobjekte gezielt manuell aussortiert werden.

Bei der Aufbereitung des Abfalls und insbesondere des Leichtverpackungsmülls ist es von besonderem Interesse, Kunststoffobjekte nach ihrer Kunststoffart, also Polyethylen (PE), Polypropylen (PP), Polystyrol (PS) oder Polyethylenteraphthalat (PET) zu trennen. Dieses geschieht im Stand der Technik mittels einer automatisch sortierenden Vorrichtung, die mittels Infrarot-Spektroskopie unterschiedliche Kunststoffarten erkennt und durch gezieltes Abtrennen der Objekte einer Kunststoffart eine große Reinheit in einzelnen Kunststofffraktionen erreicht. Somit lassen sich einzelne Kunststofffraktionen aus dem Abfall und insbesondere aus dem Leichtverpackungsmüll abtrennen, die jeweils im wesentlichen Objekte einer der oben genannten Kunststoffarten enthält.

Da diese Kunststofffraktionen jedoch Objekte unterschiedlicher Qualität enthalten, ist es im Stand der Technik bekannt, mittels einer Windsichtung leichte und schwere Objekte voneinander zu trennen. Probleme bei der Windsichtung von Kunststofffraktionen bereiten jedoch mitgerissene Folien gleicher Kunststoffart sowie Verbunde dieser Folien mit Papier. Da die Folien zudem oft mehrlagig vorliegen und somit schwere Objekte darstellen oder sogar als nicht geöffnete Müllbeutel vorliegen, kann ein Windsichter keine ausreichende Trennung der Folien von Flaschen und anderen Hohlkörpern erreichen. Da die Flaschen und Hohlkörper in der Regel aus einer dichteren Variante der Kunststoffart gegenüber den Folien bestehen, stellen die Folien Störstoffe bezüglich der Reinheit des höherwertigen dichten Kunststoffes dar.

Weiterhin ist aus dem Stand der Technik ein sogenannter Ballistikseparator bekannt, der in der Abfallaufbereitung für die Trennung verschiedener Materialien eingesetzt wird. Ein Ballistikseparator besteht aus einem oder mehreren Wurfpaddeln, die unter einem Neigungswinkel gegenüber der Horizontalen angeordnet sind und mittels eines geeigneten Antriebes zu einer kreisförmigen Bewegung angetrieben werden, wobei die Ebene der Kreisbewegung in Richtung der Längserstreckung jedes Wurfpaddels ausgerichtet ist. Ein Ballistikseparator nutzt für eine Trennung unterschiedlicher Materialien die physikalisch bedingten Unterschiede der dynamisch erregten Flugkurven, wobei das unterschiedliche ballistische Verhalten verschieden großer und verschieden schwerer Materialien für eine Auftrennung in Leicht- und Schwerfraktionen bewirkt.

Daher weist ein Ballistikseparator gegenüber einer Windsichtung den Vorteil auf, daß nicht nur das Gewicht, sondern auch die Form des zu separierenden Objektes als Unterscheidungsmerkmal verwendet wird. Wenn zudem die Wurfpaddeln als Sieb ausgebildet sind und eine Trennung in große und kleine Objekte ermöglicht, können mit einem Ballistikseparator in einem Arbeitsgang eine Trennung eines Materialgemisches nach den Kriterien flach/rund, schwer/leicht und groß/klein erfolgen. Ein derartiger Ballistikseparator ist daher im Stand der Technik im wesentlichen für die Trennung deutlich unterschiedlicher Materialien eingesetzt worden.

Der Erfindung liegt das technische Problem zugrunde, ein Verfahren und die Sortierungsanlage derart auszugestalten und weiterzubilden, daß eine im wesentlichen aus einer Kunststoffart bestehende Kunststofffraktion mit höherwertigen Anteilen angereichert werden kann.

Das zuvor aufgezeigte technische Problem wird erfindungsgemäß durch ein Verfahren zum Sortieren einer Kunststofffraktion innerhalb einer Abfallsortieranlage gemäß Patentanspruch 1 und durch die Abfallsortieranlage gemäß Patentanspruch 4 gelöst.

Zweckmäßige Weiterbildungen der Erfindung sind Gegenstand der betreffenden abhängigen Ansprüche.

Erfindungsgemäß ist erkannt worden, daß insbesondere dann, wenn ein Gemisch von im wesentlichen gleichen Materialien diese sich hinsichtlich ihrer Qualität in der. Dichte des Materials unterscheiden, die unterschiedlich harten Fraktionen mit einem Ballistikseparator voneinander getrennt werden können. Dabei bedeutet die Unterscheidung in Hartfraktion und Weichfraktion, daß die Objekte in der Hartfraktion eine niedrige Elastizität aufweisen und somit vom Wurfpaddel des Ballistikseparators schrittweise zum unteren Ende transportiert werden. Objekte der Weichfraktion weisen dagegen eine hohe Elastizität auf, geben bei einem Aufprall auf den Wurfpaddel stärker nach, prallen weniger vom Wurfpaddel ab und werden somit schrittweise zum oberen Ende des Ballistikseparators transportiert.

Somit kann die Härte als Sortierungskriterium für ein Sortieren mit einem Ballistikseparator verwendet werden. Es ist also erkannt worden, daß nicht nur die oben genannten drei Separationskriterien flach/rund, schwer/leicht und groß/klein mit Hilfe eines Ballistikseparators getrennt werden können, sondern das ein Ballistikseparator für eine Trennung von Kunststoffobjekten mit unterschiedlicher Härte eingesetzt werden kann.

Da harte Kunststoffobjekte bei der Aufwärtsbewegung des mindestens einen Paddels des Ballistikseparators stärker nach oben und vom Wurfpaddel weggerichtet beschleunigt werden, als dieses für weiche Kunststoffobjekte der Fall ist, werden durch den Wurfpaddel harte Kunststoffobjekte in Richtung des unteren Endes des Wurfpaddels transportiert. Weiche Kunststoffobjekte werden dagegen weniger stark von dem Wurfpaddel abgestoßen, so daß diese durch die Kreisbewegung schrittweise zum oberen Ende des Wurfpaddels transportiert werden. Somit werden die Kunststoffobjekte einer Kunststofffraktion mit im wesentlichen aus einer Kunststoffart bestehenden Kunststoffobjekten in eine Hartfraktion und eine Weichfraktion aufgetrennt.

Im folgenden wird die Erfindung anhand einer aus Leichtverpackungen gewonnenen Kunststofffraktion beschrieben, die aus dem Dualen System der Abfalltrennung resultiert, das in Deutschland angewendet wird. Dieses ist jedoch nicht beschränkend zu verstehen. Denn es ist prinzipiell auch möglich, aus einem sowohl Hausmüll als auch Leichtverpackungen und andere Abfallarten aufweisenden Gemisch die einzelnen Kunststoffarten herauszusortieren.

Die erfindungsgemäße Trennung durch den Ballistikseparator wird im folgenden anhand der verschiedenen Kunststoffarten näher erläutert.

Besteht die Kunststofffraktion aus Objekten aus Polyethylen (PE), so kann eine Unterscheidung in Bezug auf High Density Polyethylen (HDPE) und Low Density Polyethylen (LDPE) erfolgen. Aus HDPE bestehen überwiegend Flaschen oder andere Hohlbehälter, während LDPE für Folien, Gewebe und Schaumstoffe verwendet wird. Da HDPE das höherwertige Material für eine Wiederverwertung darstellt, stellen Objekte aus LDPE unabhängig davon, ob sie noch mit Papier oder anderen Stoffen verbunden sind, Störstoffe in einer HDPE-Fraktion dar.

Bei Objekten der Kunststoffart Polyprophylen (PP) kann auch eine Unterscheidung zwischen Folien als weiche Objekten, beispielsweise Verpackungen für Blumensträuße, die auch in Form von Verbundverpackungen auftreten, und harten PP-Objekten in Form von Bechern vollzogen werden. Auch hier stellt die harte Fraktion die reinere und somit höherwertige Fraktion dar, die durch den erfindungsgemäßen Einsatz des Ballistikseparators abgetrennt werden kann.

Darüber hinaus wird bei der Kunststoffart Polyethylenteraphtalat (PET) je nach Verarbeitung des Kunststoffes eine Unterscheidung zwischen harten und weichen Objekten möglich. Harte Objekte liegen in Form von PET-Flaschen, Lebensmittelschalen oder auch Kosmetikverpackungen vor, während Gewebe aus PET oder auch aus Polyester, das durch eine Infrarot-Spektroskopie nicht von Polyethylenteraphtalat unterschieden werden kann, und Verbundwerkstoffe aus PET und Papier oder anderen Kunststoffarten als weiche Objekte vorliegen. Durch die erfindungsgemäße Trennung in eine Hartfraktion und eine Weichfraktion durch den Ballistikseparator wird somit auch bei der Kunststoffart PET eine höherwertige Fraktion durch das erfindungsgemäße Verfahren sowie mittels der erfindungsgemäßen Vorrichtung erreicht.

Das oben aufgezeigte technische Problem wird auch durch eine Abfallsortieranlage nach Anspruch 4 gelöst.

Weitere Merkmale und Vorteile der vorliegenden Erfindung werden im folgenden anhand eines Ausführungsbeispiels näher erläutert. Dabei wird auf die beigefügte Zeichnung bezug genommen. In dieser zeigen
- Fig.1: ein Blockdiagramm zur Darstellung des Ablaufes einer Ausgestaltung des erfindungsgemäßen Verfahrens zum Sortieren einer Kunststofffraktion und
- Fig. 2: eine schematische Darstellung eines Teils eines Ballistikseparators.

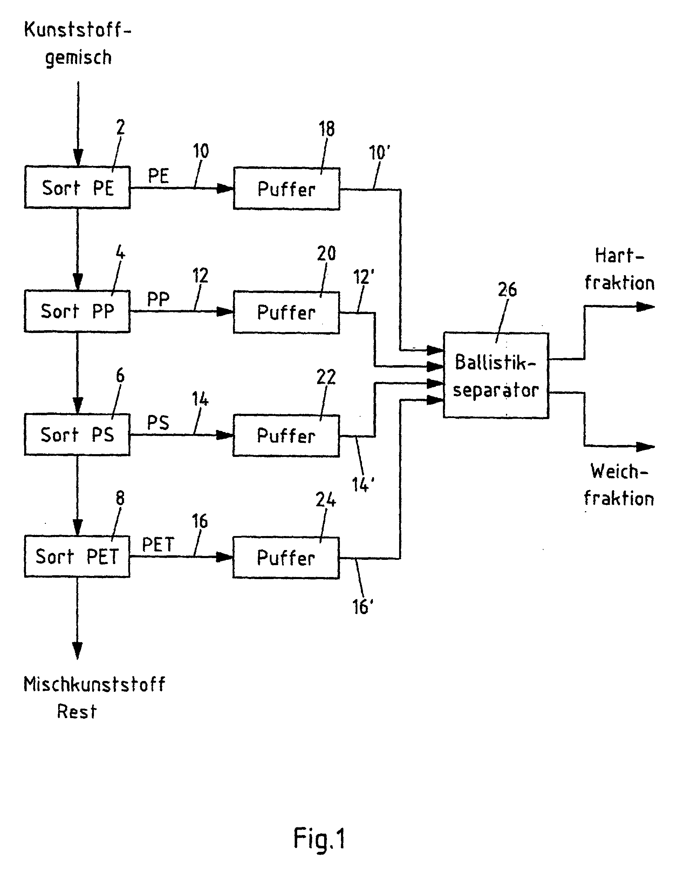

Fig. 1 zeigt ein bevorzugtes Ausführungsbeispiel des erfindungsgemäßen Verfahren zum Sortieren einer Kunststofffraktion innerhalb einer Abfallsortieranlage. In dieser Sortieranlage wird, wie in Fig. 1 oben, ein im wesentlichen von anderen Störstoffen wie Metallen und Papier befreites Kunststoffgemisch nacheinander einer Reihe von Sortierungseinrichtungen 2, 4, 6 und 8 zugeführt. Die Sortierungseinrichtung 2 dient einem Aussortieren von Polyethylen (PE)-Objekten, die Sortierungseinrichtung 4 einem Aussortieren von Polypropylen (PP)-Objekten, die Sortierungseinrichtung 6 einem Separieren von Polystyrol (PS)-Objekten und die Sortierungseinrichtung 8 dem Abtrennen von Polyethylenteraphtalat (PET)-Objekten. Dadurch werden Kunststofffraktionen mit im wesentlichen aus einer Kunststoffart bestehenden Objekten gebildet, die mittels als Pfeile dargestellte Transportmittel 10, 12, 14 und 16 zu den Puffern 18, 20, 22 und 24 transportiert werden. In den Puffern 18 bis 24 werden die separaten Kunststofffraktionen angesammelt, bis ausreichende Mengen existieren, um diese nacheinander über die weiteren Transportmittel, 10', 12', 14' und 16' einem Ballistikseparator 26 zuzuleiten. Nach Durchlaufen der Sortierungseinrichtung 8 wird der verbleibende Rest an Mischkunststoff einer weiteren Verarbeitung oder Entsorgung zugeführt.

Mit Hilfe des Ballistikseparators 26 wird dann jede der Kunststofffraktionen (PE, PP, PS und PET) separat jeweils in eine Hartfraktion und eine Weichfraktion aufgetrennt, die nach Durchlaufen des Ballistikseparators 26 getrennt vorliegen. Diese Hart- und Weichfraktionen können dann separaten Weiterverarbeitungen zugeführt werden, was insbesondere für die Hartfraktion aufgrund des höherwertigen Materials vorteilhaft ist.

Das erfindungsgemäße Verfahren besteht nun im wesentlichen darin, eine der Kunststofffraktionen aus einem der Puffer 18 bis 24 separat dem Ballistikseparator 26 für ein Auftrennen in eine Hartfraktion und eine Weichfraktion zuzuführen. Ebenso besteht die Erfindung in einer Leichtverpackungssortieranlage, die mindestens eine Sortierungseinrichtung 2 bis 8, Transportmittel 10 bis 16 bzw. 10' bis 16' zum Transportieren der aussortierten Kunststofffraktion und dem beschriebenen Ballistikseparator 26 aufweist, wobei die Transportmittel 10 bis 16 sowie 10' bis 16' jede Kunststofffraktion von der mindestens einen Sortierungseinrichtung 2 bis 8 zum Ballistikseparator 26 transportiert.

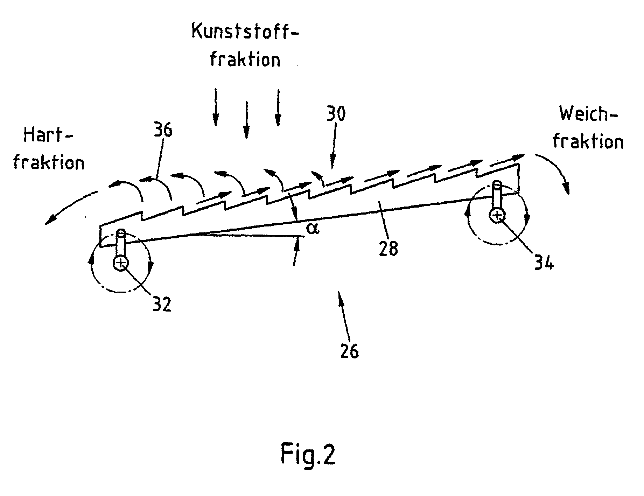

Fig. 2 zeigt die Funktionsweise des Ballistikseparator, wie er aus dem Stand der Technik bekannt ist und wie er erfindungsgemäß zum Auftrennen einer Kunststofffraktion in eine Hartfraktion und eine Weichfraktion verwendet wird.

Der insgesamt mit 26 gekennzeichnete Ballistikseparator weist einen oder mehrere Wurfpaddel 28 auf, die unter einem Winkel α zur Horizontalen angeordnet sind und eine obere gestufte Oberfläche 30 aufweist. Eine Abstufung der Oberfläche ist nicht erforderlich, unterstützt aber den gewünschten Trenneffekt. Die zu trennende Kunststofffraktion wird von oben auf das Wurfpaddel 28 aufgebracht, und gleichzeitig wird mittels der Antriebe 32 und 34 das Wurfpaddel zu einer kreisförmigen Bewegung angetrieben.

Während der Aufwärtsbewegung treffen die harten Kunststoffobjekte auf die schräg gestellten Abschnitte der Oberfläche 30 auf und werden derart beschleunigt, daß sie in Fig. 2 nach oben und links beschleunigt werden. Die anschließend durchlaufenden Wurfparabeln sind andeutungsweise durch die Pfeile 36 dargestellt. Somit bewegen sich die harten Kunststoffobjekte der Kunststofffraktion schrittweise in Richtung des unteren linken Endes, so daß dieser als Hartfraktion vom Ballistikseparator 26 abgetrennt werden.

Weiche Kunststoffobjekte werden bei der Aufwärtsbewegung des Wurfpaddels 28 dagegen nur geringfügig angehoben, so daß diese während der weiteren wiederkehrenden Kreisbewegungen schrittweise zum oberen in Fig. 2 rechten Ende transportiert werden. Dies geschieht dadurch, daß sie während des oberen Abschnittes der Kreisbewegung in Richtung des oberen Endes des Wurfpaddels 28 beschleunigt werden und bei der nachfolgenden nach unten gerichteten Bewegung ein wenig von der Oberfläche 30 abheben. Während der weiteren Kreisbewegung wird der Wurfpaddel 28 weiter in Fig. 2 nach links bewegt, so daß die weichen Objekte schrittweise in Fig. 2 nach rechts transportiert werden und schließlich als Weichfraktion vom Ballistikseparator 26 abgetrennt werden.

## Patentansprüche

1. Verfahren zum Sortieren einer Kunststofffraktion innerhalb einer Abfallsortieranlage,
- bei dem mindestens eine im wesentlichen aus einer Kunststoffart bestehenden Kunststofffraktion aus einem Ausgangsabfallgemisch aussortiert wird und
- bei dem die Kunststofffraktion mit Hilfe eines Ballistikseparators (26) in eine im wesentlichen harte Kunststoffobjekte aufweisende Hartfraktion und eine im wesentlichen weiche Kunststoffobjekte aufweisende Weichfraktion getrennt wird.

2. Verfahren nach Anspruch 1,
bei dem eine Kunststofffraktion im wesentlichen bestehend aus Objekten aus der Kunststoffart Polyethylen (PE), Polypropylen (PP), Polystyrol (PS) oder Polyethylenteraphthalat (PET) in eine Hartfraktion und eine Weichfraktion getrennt wird.

3. Verfahren nach Anspruch 1 oder 2,
bei dem mindestens zwei Kunststofffraktionen mit unterschiedlichen Kunststoffarten in separaten Bunkern zwischengelagert werden und bei dem die verschiedenen Kunststofffraktionen nacheinander mit dem Ballistikseparator in eine Hartfraktion und eine Weichfraktion getrennt werden.

4. Abfallsortieranlage
- mit mindestens einer Sortierungseinrichtung (2,4,6,8), die aus einem Abfallgemisch mindestens eine im wesentlichen aus einer Kunststoffart bestehende Kunststofffraktion aussortiert,
- mit Transportmitteln (10,12,14,16) zum Transportieren der aussortierten Kunststofffraktion und
- mit einem Ballistikseparator (26) zum Trennen der mindestens einen Kunststofffraktion in eine harte Kunststoffobjekte aufweisende Hartfraktion und eine weiche Kunststoffobjekte aufweisende Weichfraktion,
- wobei die Transportmittel (10,12,14,16) die Kunststofffraktion von der mindestens einen Sortierungseinrichtung (2,4,6,8) zum Ballistikseparator (26) transportiert.

5. Abfallsortieranlage nach Anspruch 4,
**dadurch gekennzeichnet,**
**daß** für jede Kunststofffraktion ein Puffer (18,20,22,24) für eine Zwischenlagerung und Ansammlung einer vorgegebenen Menge an Kunststofffraktion vorgesehen ist, wobei die Transportmittel (10,12,14,16) die Kunststofffraktion zunächst von der Sortierungseinrichtung (2,4,6,8) zum Puffer (18,20,22,24) und anschließend nacheinander zum Ballistikseparator (26) transportiert.

## Claims

1. A method for sorting a plastic fraction within a waste sorting system,
- in which at least one plastic fraction essentially comprising one type of plastic materials is sorted out of an initial waste mixture, and
- in which the plastic fraction is separated into a hard fraction essentially comprising hard plastic objects and into a soft fraction essentially comprising soft plastic fractions by means of a ballistic separator (26).

2. The method according to Claim 1, **characterized in that** one plastic fraction essentially comprising objects of the plastic material types polyethylene (PE), polypropylene (PP), polystyrene (PS), or polyethylene terephthalate (PET) is separated into a hard fraction and into a soft fraction.

3. The method according to Claims 1 or 2, **characterized in that** at least two plastic fractions are preliminarily stored in separate bunkers and wherein the different plastic fractions are successively separated into a hard fraction and into a soft fraction by means of a ballistic separator.

4. A waste sorting system
- comprising at least one sorting system (2, 4, 6, 8) which sorts out at least one plastic fraction essentialy comprising one type of plastic material from a waste mixture,
- comprising transportation means (10, 12, 14, 16) to transport the plastic fraction that has been sorted out, and
- comprising a ballistic separator (26) to separate the at least one plastic fraction into a hard fraction comprising hard objects and a soft fraction comprising soft objects,
- wherein the transportation means (10, 12, 14, 16) transport the plastic fraction from the at least one sorting system (2, 4, 6, 8) to the ballistic separator (26).

5. The waste sorting system according to Claim 4, **characterized in that**, for each plastic fraction, a buffer (18, 20, 22, 24) is provided for intermediate storage and accumulation of a prespecified quantity of the plastic fraction, wherein the transportation means (10, 12, 14, 16) transport the plastic fraction initially from the sorting system (2, 4, 6, 8) to the buffer (18, 20, 22, 24) and afterwards successively to the ballistic separator (26).

## Revendications

1. Procédé de tri d'une fraction de matière plastique à l'intérieur d'une installation de tri de déchets, dans lequel
- au moins une fraction de matière plastique composée essentiellement d'un type de matière plastique est triée à partir d'un mélange de déchets de départ, et
- la fraction de matière plastique est séparée au moyen d'un séparateur balistique (26) en une fraction dure présentant essentiellement des objets en matière plastique dure et en une fraction souple présentant essentiellement des objets en matière plastique souple.

2. Procédé selon la revendication 1, dans lequel une fraction de matière plastique essentiellement composée d'objets en plastique du type polyéthylène (PE), polypropylène (PP), polystyrène (PS) ou polytéréphtalate d'éthylène (PET) est séparée en une fraction dure et en une fraction souple.

3. Procédé selon la revendication 1 ou la revendication 2, dans lequel au moins deux fractions de matière plastique font l'objet d'un stockage intermédiaire dans des silos séparés et dans lequel les différentes fractions de matière plastique sont séparées les unes après les autres en une fraction dure et une fraction souple au moyen du séparateur balistique.

4. Installation de tri de déchets comprenant
- au moins un dispositif de tri (2, 4, 6, 8) qui, à partir d'un mélange de déchets, trie au moins une fraction de matière plastique composée essentiellement d'un type de matière plastique,
- des moyens de transport (10, 12, 14, 16) pour transporter la fraction de matière plastique triée, et
- un séparateur balistique (26) pour séparer ladite au moins une fraction de matière plastique en une fraction dure présentant essentiellement des objets en matière plastique dure et en une fraction souple présentant essentiellement des objets en matière plastique souple,
- où les moyens de transport (10, 12, 14, 16) transportent la fraction de matière plastique dudit au moins un dispositif de tri (2, 4, 6, 8) au séparateur balistique (26).

5. Installation de tri de déchets selon la revendication 4, **caractérisé en ce qu'**il est prévu pour chaque fraction de matière plastique un tampon (18, 20, 22, 24) pour le stockage intermédiaire d'une quantité de fraction de matière plastique prédéterminée, les moyens de transport (10, 12, 14, 16) transportant tout d'abord la fraction de matière plastique du dispositif de tri (2, 4, 6, 8) au tampon (18, 20, 22, 24) et ensuite, l'une après l'autre, au séparateur balistique (26).
